# EUROPÄISCHE PATENTSCHRIFT

(11) **EP 0 896 595 B1**
(45) Veröffentlichungstag und Bekanntmachung des Hinweises auf die Patenterteilung: **21.11.2001**
(21) Anmeldenummer: 97920747.9
(22) Anmeldetag: 24.04.1997
(51) Int. Cl.: C08F 110/02

(54) **VERFAHREN ZUR HERSTELLUNG VON NIEDERMOLEKULAREN ETHYLENPOLYMERISATEN IM HOCHDRUCK**
PROCESS FOR PREPARING LOW-MOLECULAR ETHYLENE POLYMERS UNDER HIGH PRESSURE
PROCEDE DE PREPARATION DE POLYMERISATS D'ETHYLENE DE FAIBLE POIDS MOLECULAIRE EN HAUTE PRESSION

(30) Priorität: 30.04.1996 DE 19617229
(43) Veröffentlichungstag der Anmeldung: 17.02.1999
(73) Patentinhaber: BASF AKTIENGESELLSCHAFT, 67056 Ludwigshafen (DE)
(72) Erfinder: MOLL, Ulrich, D-67487 St. Martin (DE); DECKERS, Andreas, D-55234 Flomborn (DE); KINGMA, Arend, Jouke, D-67069 Ludwigshafen (DE); WEBER, Wilhelm, D-67435 Neustadt (DE)
(86) Internationale Anmeldenummer: EP9702100
(87) Internationale Veröffentlichungsnummer: WO9741161

(56) Entgegenhaltungen:
- EP-A- 0 513 380
- EP-A- 0 573 120
- EP-A- 0 612 768
- WO-A-95/07991

## Beschreibung

Die vorliegende Erfindung betrifft ein Verfahren zur Herstellung von Ethylenpolymerisaten mit einem Molekulargewicht M_{w} (Gewichtsmittelwert) von kleiner als 20.000 g/mol bei Temperaturen im Bereich von 200 bis 280°C und Drücken im Bereich von 1000 bis 3500 bar in Gegenwart eines Katalysatorsystems.

Weiterhin betrifft die vorliegende Erfindung die Verwendung der hierbei erhältlichen Ethylenpolymerisate zur Herstellung von oxidierten Wachsen sowie die daraus erhältlichen oxidierte Wachse.

Niedermolekulare Ethylenpolymerisate haben Bedeutung für eine Vielzahl von Anwendungsgebieten, beispielsweise als Beimischung für abriebfeste Druckfarben als Lackmattierungsmittel und zur Herstellung von emulgierbaren Wachsen für Putzmittel. Verschiedene Methoden zur Herstellung solcher niedermolekularen Ethylenpolymerisate sind bekannt. So beschreibt die EP-A 260 999 ein Hochdruckverfahren zur Herstellung von Ethylenpolymerisaten unter Verwendung eines Katalysatorsystems aus einer Metallocenkomponente und Alumoxan. Bei hohen Temperaturen ist jedoch die Aktivität dieses Katalysatorsystems sehr gering und die erhaltenen Polymerisate weisen einen hohen Aluminiumgehalt auf.

In der EP-A 612 768 und der EP-A 612 769 werden Verfahren zur Herstellung von Ethylencopolymerisaten beschrieben, bei denen als Katalysatorsysteme Metallocenkomplexe, ionisierende ionische Verbindungen und aluminiumorganische Verbindungen eingesetzt werden. Hierbei werden Polymerisate mit einem deutlich höheren Molekulargewicht erhalten.

Aufgabe der vorliegenden Erfindung war es daher, Verfahren zur Herstellung von niedermolekularen Ethylenpolymerisaten zur Verfügung zu stellen, die die genannten Nachteile nicht aufweisen, die mit sehr geringen Wasserstoffmengen zur Molekulargewichtsregelung auskommen und wobei die entstehenden Ethylenpolymerisate eine enge Molekulargewichtsverteilung aufweisen. Zudem sollen hohe Produktionsraten und damit wirtschaftlich interessante Umsätze erzielt werden.

Demgemäß wurden Verfahren zur Herstellung von Ethylenpolymerisaten mit einem Molekulargewicht M_{w} (Gewichtsmittelwert) von kleiner als 20.000 g/mol bei Temperaturen im Bereich von 200 bis 280°C und Drücken im Bereich von 1000 bis 3500 bar in Gegenwart eines Katalysatorsystems gefunden, wobei man als Katalysatorsystem ein solches verwendet das
A) einen unverbrückten substituierten oder unsubstituierten Biscyclopentadienylkomplex,
B) eine Metallverbindung der allgemeinen Formel I

   M¹ (R¹)ᵣ (R²)ₛ (R³)ₜ I,

   in der
   - M¹: ein Alkali-, ein Erdalkalimetall oder ein Metall der III. Hauptgruppe des Periodensystems bedeutet,
   - R¹: Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
   - R² und R³: Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
   - r: eine ganze Zahl von 1 bis 3
   und
   s und t ganze Zahlen von 0 bis 2 bedeuten, wobei die Summe r+s+t der Wertigkeit von M¹ entspricht
   und
C) eine metalloceniumionenbildende Verbindung, ausgewählt aus der Gruppe bestehend aus starken, neutralen Lewissäuren, ionischen Verbindungen mit lewissauren Kationen und ionischen Verbindungen mit Brönsted-Säuren als Kationen
enthält, die Komponenten A), B) und C) miteinander mischt und spätestens nach 5 Minuten in den Reaktor dosiert.

Außerdem wurde die Verwendung der hierbei erhältlichen Ethylenpolymerisate zur Herstellung von oxidierten Wachsen sowie die daraus erhältlichen oxidierte Wachse gefunden.

Unter dem Begriff Ethylenpolymerisate werden sowohl Homo- als auch Copolymerisate des Ethylens verstanden. Als Comonomere sind C₃- bis C₁₂-Alkene bevorzugt, insbesondere Alk-1-ene wie Propen, But-1-en, Pent-1-en, 4-Methyl-pent-1-en, Hex-1-en, Hept-1-en oder Oct-1-en sowie Gemische aus diesen C₃- bis C₁₂-Alk-1-enen. Bevorzugtes Comonomer ist Propen, wobei jedoch der Anteil an Ethylen mindestens 50 mol-% beträgt. Vorzugsweise werden jedoch mit dem erfindungsgemäßen Verfahren Homopolymerisate des Ethylens hergestellt.

Die mit dem erfindungsgemäßen Verfahren hergestellten Ethylenpolymerisate sind niedermolekular, das Molekulargewicht M_{w} (Gewichtsmittelwert) ist kleiner als 20.000 mol/g, insbesondere liegt M_{w} im Bereich von 1000 bis 19.500 mol/g.

Das erfindungsgemäße Verfahren ist ein Hochdruckverfahren, man arbeitet bei Temperaturen im Bereich von 200 bis 280°C, vorzugsweise von 220 bis 260°C und bei Drücken im Bereich von 1000 bis 3500 bar, vorzugsweise bei 1500 bis 3000 bar.

Das erfindungsgemäße Verfahren kann in den üblichen für die Hochdruckpolymerisation verwendeten Reaktoren durchgeführt werden, beispielsweise in Autoklaven oder insbesondere in Hochdruckrohrreaktoren.

Das bei dem erfindungsgemäßen Verfahren eingesetzte Katalysatorsystem enthält als Komponente A) einen unverbrückten substituierten oder unsubstituierten Biscyclopentadienylkomplex.

Bevorzugte Biscyclopentadienylkomplexe sind solche der allgemeinen Formel II 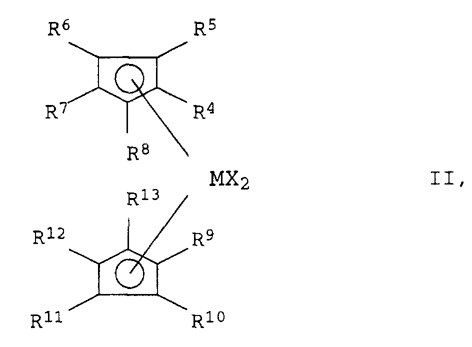 in der die Substituenten folgende Bedeutung haben:
- M: Titan, Zirkonium, Hafnium, Vanadium, Niob oder Tantal,
- x: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹⁴ oder -NR¹⁴R¹⁵,
wobei
- R¹⁴ und R¹⁵: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
- R⁴ bis R¹³: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl oder Si(R¹⁶)₃ mit
- R¹⁶: C₁- bis C₁₀-Alkyl, C₃- bis C₁₀-Cycloalkyl oder C₆- bis C₁₅-Aryl.

Von den Verbindungen der allgemeinen Formel II sind diejenigen bevorzugt, in denen
- M: für Titan, Zirkonium oder Hafnium steht, insbesondere für Zirkonium,
- X: für Chlor, C₁- bis C₄-Alkyl oder Phenyl, insbesondere für Chlor,
- R⁴ bis R¹³: Wasserstoff, C₁- bis C₄-Alkyl oder Si(R¹²)₃ bedeuten.

Die Reste X können gleich oder verschieden sein, bevorzugt sind sie gleich.

Insbesondere sind die Verbindungen der Formel II geeignet, in denen die Cyclopentadienylreste gleich sind.

Beispiele für besonders geeignete Verbindungen sind u.a.:
Bis (cyclopentadienyl)zirkoniumdichlorid,
Bis (pentamethylcyclopentadienyl)-zirkoniumdichlorid,
Bis(methylcyclopentadienyl)-zirkoniumdichlorid,
Bis(ethylcyclopentadienyl)-zirkoniumdichlorid,
Bis(n-butylcyclopentadienyl)-zirkoniumdichlorid und
Bis(trimethylsilylcyclopentadienyl)-zirkoniumdichlorid.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Biscyclopentadienylkomplexe eingesetzt werden.

Das bei dem erfindungsgemäßen Verfahren eingesetzte Katalysatorsystem enthält als Komponente B) eine Metallverbindung der allgemeinen Formel I

M¹ (R¹)ᵣ (R²)ₛ (R³)ₜ I,

in der
- M¹: ein Alkali-, ein Erdalkalimetall oder vorzugsweise ein Metall der III. Hauptgruppe des Periodensystems, d.h. Bor, Aluminium, Gallium, Indium oder Thallium bedeutet,
- R¹: Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
- R² und R³: Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
- r: eine ganze Zahl von 1 bis 3
und
- s und t: ganze Zahlen von 0 bis 2 bedeuten, wobei die Summe r+s+t der Wertigkeit von M¹ entspricht.

Von den Metallverbindungen der allgemeinen Formel I sind diejenigen bevorzugt, in denen
- M¹: Lithium, Magnesium oder Aluminium bedeutet und
- R¹ bis R³: für C₁- bis C₁₀-Alkyl stehen.

Besonders bevorzugte Metallverbindungen der Formel I sind n-Butyl-Lithium, n-Butyl-n-octyl-Magnesium, n-Butyl-n-heptyl-Magnesium, Tri-n-hexyl-aluminium, Tri-iso-butyl-aluminium, Triethylaluminium und Trimethylaluminium, insbesondere Triiso-butyl-aluminium.

Die Komponente B) ist bevorzugt in einer Menge von 10000:1 bis 1:1, insbesondere 400:1 bis 200:1 (molares Verhältnis von M¹ aus I zu Übergangsmetall M aus II) im Katalysatorsystem enthalten.

Als Komponente C) enthält das bei dem erfindungsgemäßen Verfahren eingesetzte Katalysatorsystem eine metalloceniumionenbildende Verbindung, ausgewählt aus der Gruppe bestehend aus starken, neutralen Lewissäuren, ionischen Verbindungen mit lewissauren Kationen und ionischen Verbindungen mit Brönsted-Säuren als Kationen.

Als starke, neutrale Lewissäuren sind Verbindungen der allgemeinen Formel III

M²X¹X²X³ III

bevorzugt, in der
- M²: ein Element der III. Hauptgruppe des Periodensystems bedeutet, insbesondere B, Al oder Ga, vorzugsweise B,
- X¹, X² und X³: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel III, in der X¹, X² und X³ gleich sind, vorzugsweise Tris(pentafluorphenyl)boran.

Als ionische Verbindungen mit lewissauren Kationen sind Verbindungen der allgemeinen Formel IV

[(Y^{a+})Q₁Q₂...Q_{z}]^{d+} IV

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht
- z: für ganze Zahlen von 0 bis 5
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Die Komponente C) ist bevorzugt in einer Menge von 0,1:1 bis 10:1, insbesondere 1:1 bis 5:1 (molares Verhältnis von Bor aus Komponente C) zu Übergangsmetall M aus II) im Katalysatorsystem enthalten.

Vorzugsweise werden die Komponenten A) bis C) in Lösung eingesetzt, wobei die Komponenten A) und C) bevorzugt in aromatischen Kohlenwasserstoffen mit 6 bis 20 C-Atomen, insbesondere in Xylolen oder Toluol, gelöst sind und die Komponente B) in aliphatischen Kohlenwasserstoffen mit 5 bis 12 C-Atomen, insbesondere in Isododecan oder Heptan.

Bei dem erfindungsgemäßen Verfahren werden die Komponenten A), B) und C) gemischt, vorzugsweise bei Raumtemperatur, und spätestens nach 5 Minuten, vorzugsweise spätestens nach 3 Minuten, insbesondere sofort in den Reaktor dosiert.

Vorzugsweise erfolgt das Mischen der Komponenten A), B) und C) in einem Ansatzbehälter. Dabei wird der Vorrat im Ansatzbehälter kontinuierlich so ergänzt, daß die Verweilzeit der aktiven Katalysatorlösung vom Zeitpunkt des Mischens der Komponenten A) bis C) bis zur Dosierung maximal 5 Minuten beträgt.

Das Molekulargewicht der entstehenden Ethylenpolymerisate kann durch Regelung mit Wasserstoff beeinflußt werden. Vorzugsweise beträgt die Menge an Wasserstoff 0,1 bis 5 mol-%, bezogen auf die Ethylenmenge (Durchsatz), insbesondere 0,2 bis 3 mol-%.

Vorzugsweise geht man bei dem erfindungsgemäßen Verfahren so vor, daß man Ethylen, gegebenenfalls weitere Comonomere und Wasserstoff unter Druck kontinuierlich in den Reaktor leitet, in einem separaten Ansatzbehälter die Lösungen der Komponenten A), B) und C) in beliebiger Reihenfolge mischt und diese aktive Katalysatorlösung sofort, ohne weitere Verweilzeit, kontinuierlich in den Reaktor dosiert.

Die Polymerisationszeiten können im Bereich von 30 bis 300 Sekunden liegen, vorzugsweise im Bereich von 60 bis 180 Sekunden.

Das erfindungsgemäße Verfahren zeichnet sich durch hohe Produktionsraten und damit hohen Umsätzen aus, es ist technisch einfach durchführbar und es werden nur geringe Mengen an Wasserstoff zur Molekulargewichtsregelung benötigt. Die mit dem erfindungsgemäßen Verfahren hergestellten Ethylenpolymerisate zeichnen sich durch eine enge Molekulargewichtsverteilung aus und können zur Herstellung von oxidierten Wachsen verwendet werden.

### Beispiele

### Beispiele 1 bis 4: Herstellung von Homopolyethylen (PE) im Autoklaven

### Beispiel 1:

Die Polymerisation wurde in einem kontinuierlich betriebenen 1-l-Hochdruckautoklaven mit Rührmotor durchgeführt. 12800 l/h Ethylen und 120 l/h Wasserstoff (0,9 mol-% Wasserstoff, bezogen auf Ethylendurchsatz) wurden unter Druck kontinuierlich in den Autoklaven geleitet, wobei der Druck im Innern des Autoklaven auf 1500 bar geregelt wurde. In einen separaten Ansatzbehälter wurden äquivalente Mengen einer 60 mmolaren Lösung von Triisobutylaluminium in Heptan, einer 180 µmolaren Lösung von N,N-Dimethylaniliniumtetrakis(pentafluorphenyl)borat in Toluol und einer 150 µmolaren Lösung von Bis(n-butylcyclopentadienyl)zirkoniumdichlorid in Toluol gegeben (molares Verhältnis Zr:Al = 1:400 und Zr:B = 1:1,2). Anschließend wurde diese aktive Katalysatorlösung kontinuierlich in den Autoklaven dosiert und die Reaktionstemperatur im Innern des Autoklaven auf 260°C gehalten. Die Vorratsmenge an aktiver Katalysatorlösung wurde so geregelt, daß die maximale Verweilzeit im Ansatzbehälter bis zur Dosierung in den Reaktor 3 Minuten betrug.

### Beispiel 2:

Es wurde wie in Beispiel 1 gearbeitet, jedoch betrug die Polymerisationstemperatur 240°C.

### Beispiel 3:

Es wurde wie in Beispiel 1 gearbeitet, jedoch betrug die Menge an Wasserstoff 60 l/h.

### Beispiel 4:

Es wurde wie in Beispiel 1 gearbeitet, jedoch betrug die Polymerisationstemperatur 240°C und es wurde kein Wasserstoff zudosiert.

### Beispiel 5: Herstellung von Homopolyethylen (PE) im Rohrreaktor

Die Polymerisation wurde in einem kontinuierlich betriebenen Hochdruckrohrreaktor (Länge: 620 m, Durchmesser: 15 mm) durchgeführt. 560000 l/h Ethylen und 1200 l/h Wasserstoff (0,2 mol-% Wasserstoff, bezogen auf Ethylendurchsatz) wurden unter Druck kontinuierlich in den Rohrreaktor geleitet, wobei der Druck im Innern des Rohrreaktors auf 1700 bar geregelt wurde. In einen separaten Ansatzbehälter wurden äquivalente Mengen einer 360 mmolaren Lösung von Triisobutylaluminium in Heptan, einer 1,08 mmolaren Lösung von N,N-Dimethylaniliniumtetrakis(pentafluorphenyl)borat in Toluol und einer 0,9 mmolaren Lösung von Bis(n-butylcyclopentadienyl)zirkoniumdichlorid in Toluol gegeben (molares Verhältnis Zr:Al = 1:400 und Zr:B = 1:1,2). Anschließend wurde diese aktive Katalysatorlösung kontinuierlich in den Rohrreaktor dosiert und die Reaktionstemperatur auf 240°C gehalten. Die Vorratsmenge an aktiver Katalysatorlösung wurde so geregelt, daß die maximale Verweilzeit im Ansatzbehälter bis zur Dosierung in den Reaktor 5 Minuten betrug.

### Vergleichsbeispiel V1:

Es wurde wie in Beispiel 1 gearbeitet, jedoch betrug die Menge an Wasserstoff 500 l/h und statt der Lösung von Bis(n-butylcyclopentadienyl)zirkoniumdichlorid wurde eine 150 µmolare Lösung von Diphenylmethylen(cyclopentadienyl)(2,7-di-tert.-butylfluorenyl)zirkoniumdichlorid in Toluol eingesetzt.

Die Ergebnisse sind in der nachstehenden Tabelle zusammengefaßt.

Die Gewichtsmittelwerte M_{w} und Zahlenmittelwerte Mₙ wurden mittels Gelpermeationschromatographie bestimmt, die Ermittlung der Dichte erfolgte über IR-Messungen. Die Schmelzpunkte Fp und die Erstarrungspunkte Ep wurden nach DIN 51007 ermittelt, die Tropfpunkte Tp nach ASTM-D 3954.

Die Kristallinitäten wurden durch Dünnschichtchromatographie bestimmt, die Kugeldruckhärten nach DIN 50133 und die Viskositäten nach Ubbelohde (DIN 51562).

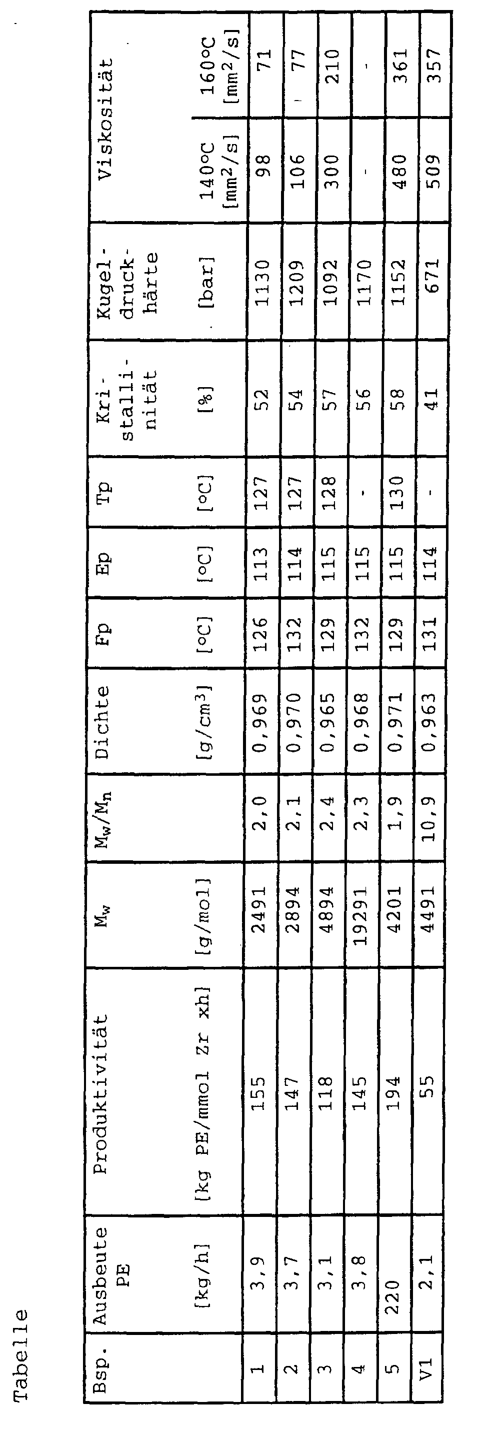

## Patentansprüche

1. Verfahren zur Herstellung von Ethylenpolymerisaten mit einem Molekulargewicht M_{w} (Gewichtsmittelwert) von kleiner als 20.000 g/mol bei Temperaturen im Bereich von 200 bis 280°C und Drücken im Bereich von 1000 bis 3500 bar in Gegenwart eines Katalysatorsystems, **dadurch gekennzeichnet, daß** man als Katalysatorsystem ein solches verwendet das
A) einen unverbrückten substituierten oder unsubstituierten Biscyclopentadienylkomplex,
B) eine Metallverbindung der allgemeinen Formel I
M¹ (R¹)ᵣ (R²) ₛ (R³)ₜ I,
in der
M¹ ein Alkali-, ein Erdalkalimetall oder ein Metall der III. Hauptgruppe des Periodensystems bedeutet,
R¹ Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
R² und R³ Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
r eine ganze Zahl von 1 bis 3
und
s und t ganze Zahlen von 0 bis 2 bedeuten, wobei die Summe r+s+t der Wertigkeit von M¹ entspricht
und
C) eine metalloceniumionenbildende Verbindung, ausgewählt aus der Gruppe bestehend aus starken, neutralen Lewissäuren, ionischen Verbindungen mit lewissauren Kationen und ionischen Verbindungen mit Brönsted-Säuren als Kationen
enthält, die Komponenten A), B) und C) miteinander mischt und spätestens nach 5 Minuten in den Reaktor dosiert.

2. Verfahren nach Anspruch 1, **dadurch gekennzeichnet, daß** als Komponente A) Biscyclopentadienylkomplexe der allgemeinen Formel II 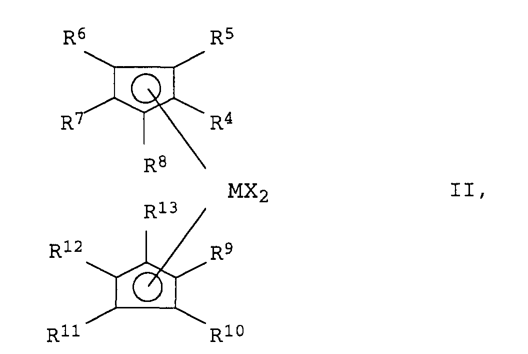 in der die Substituenten folgende Bedeutung haben:
M Titan, Zirkonium, Hafnium, Vanadium, Niob oder Tantal,
X Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹⁴ oder -NR¹⁴R¹⁵,
wobei
R¹⁴ und R¹⁵ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
R⁴ bis R¹³ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl oder Si(R¹⁶)₃ mit
R¹⁶ C₁- bis C₁₀-Alkyl, C₃- bis C₁₀-Cycloalkyl oder C₆-bis C₁₅-Aryl,
einsetzt.

3. Verfahren nach den Ansprüchen 1 bis 2, **dadurch gekennzeichnet, daß** als Komponenten B) eine Metallverbindung der allgemeinen Formel I eingesetzt wird, in der M¹ ein Metall der III. Hauptgruppe des Periodensystems bedeutet.

4. Verfahren nach den Ansprüchen 1 bis 3, **dadurch gekennzeichnet, daß** man die Komponenten A), B) und C) mischt und spätestens nach 3 Minuten in den Reaktor dosiert.

## Claims

1. A process for preparing ethylene polymers having a molecular weight M_{w} (weight average) of less than 20,000 g/mol at from 200 to 280°C and pressures in the range from 1000 to 3500 bar in the presence of a catalyst system, wherein the catalyst system used comprises
A) an unbridged, substituted or unsubstituted biscyclopentadienyl complex,
B) a metal compound of the formula I
M¹ (R¹)ᵣ (R²)ₛ (R³)ₜ I,
where
M¹ is an alkali metal, an alkaline earth metal or a metal of main group III of the Periodic Table,
R¹ is hydrogen, C₁-C₁₀-alkyl, C₆-C₁₅-aryl, alkylaryl or arylalkyl each having from 1 to 10 carbon atoms in the alkyl radical and from 6 to 20 carbon atoms in the aryl radical,
R² and R³ are hydrogen, halogen, C₁-C₁₀-alkyl, C₆-C₁₅-aryl, alkylaryl, arylalkyl or alkoxy each having from 1 to 10 carbon atoms in the alkyl radical and from 6 to 20 carbon atoms in the aryl radical,
r is an integer from 1 to 3
and
s and t are integers from 0 to 2, where the sum r+s+t corresponds to the valence of M¹
and
C) is a compound capable of forming metallocenium ions and selected from the group consisting of strong, uncharged Lewis acids, ionic compounds containing Lewis acid cations and ionic compounds containing Brönsted acids as cations,
and the components A), B) and C) are mixed with one another and introduced into the reactor after no more than 5 minutes.

2. A process as claimed in claim 1, wherein component A) is a biscyclopentadienyl complex of the formula II 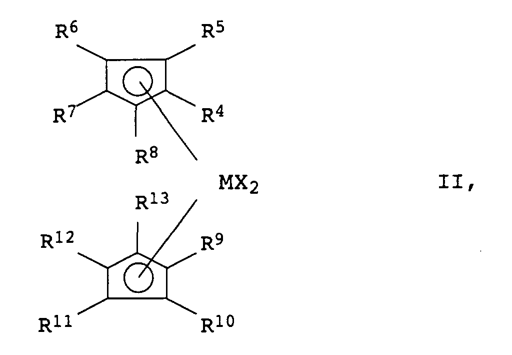 where the substituents have the following meanings:
M is titanium, zirconium, hafnium, vanadium, niobium or tantalum,
X is fluorine, chlorine, bromine, iodine, hydrogen, C₁-C₁₀-alkyl, C₆-C₁₅-aryl, alkylaryl having from 1 to 10 carbon atoms in the alkyl radical and from 6 to 20 carbon atoms in the aryl radical, -OR¹⁴ or -NR¹⁴R¹⁵,
where
R¹⁴ and R¹⁵ are C₁-C₁₀-alkyl, C₆-C₁₅-aryl, alkylaryl, arylalkyl, fluoroalkyl or fluoroaryl each having from 1 to 10 carbon atoms in the alkyl radical and from 6 to 20 carbon atoms in the aryl radical,
R⁴ and R¹³ are hydrogen, C₁-C₁₀-alkyl, 5- to 7-membered cycloalkyl which in turn may bear a C₁-C₁₀-alkyl group as substituent, C₆-C₁₅-aryl or arylalkyl or Si(R¹⁶)₃ where
R¹⁶ is C₁-C₁₀-alkyl, C₃-C₁₀-cycloalkyl or C₆-C₁₅-aryl.

3. A process as claimed in claim 1 or 2, wherein component B) is a metal compound of the formula I in which M¹ is a metal of main group III of the Periodic Table.

4. A process as claimed in any of claims 1 to 3, wherein the components A), B) and C) are mixed and introduced into the reactor after no more than 3 minutes.

## Revendications

1. Procédé de fabrication de polymères d'éthylène ayant une masse moléculaire Mₘ (moyenne en masse) inférieure à 20000 g/mole à une température comprise entre 200 °C à 280°C et à une pression comprise entre 1000 bars et 3500 bars en présence d'un système catalyseur, **caractérisé en ce que** l'on met en oeuvre, en tant que système catalytique, un système catalytique qui comprend
A) un complexe bis-cyclopentadiényle non ponté et non substitué ou substitué,
B) un composé métallique de formule générale I
M¹ (R¹)ᵣ (R²)ₛ (R³)ₜ I,
dans laquelle
M¹ représente un atome de métal alcalin, alcalino-terreux ou de métal du Groupe principal III de la Classification Périodique des Eléments,
R¹ représente un atome d'hydrogène, un groupe alkyle en C₁ à C₁₀, aryle en C₆ à C₁₅, alkylaryle ou arylalkyle possédant respectivement 1 à 10 atomes de C dans le résidu alkyle et 6 à 20 atomes de C dans le résidu aryle,
R² et R³ représentent un atome d'hydrogène ou d'halogène, un groupe alkyle en C₁ à C₁₀, aryle en C₆ à C₁₅, alkylaryle, arylalkyle ou alcoxy possédant respectivement 1 à 10 atomes de C dans le résidu alkyle et 6 à 20 atomes de C dans le résidu aryle,
r représente un nombre entier dans la plage de 1 à 3,
et
s et t représentent un nombre entier compris entre 0 et 2, où la somme r+s+t correspond à la valence de M¹
et
C) un composé qui forme des ions métallocénium choisi dans le groupe formé par les acides de Lewis neutres forts, les composés ioniques ayant des cations d'acide de Lewis et les composés ioniques ayant en tant que cations des acides de Brönsted,
et que l'on mélange les constituants A), B) et C) pour les introduire au plus tard 5 minutes après dans le réacteur.

2. Procédé selon la revendication 1, **caractérisé en ce que** l'on met en oeuvre en tant que constituant A), les 5 complexes bis-cyclopentadiényles de la formule générale II 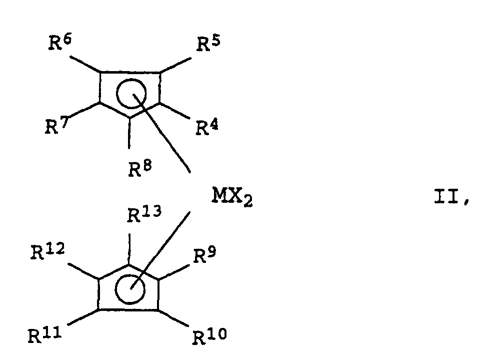 dans laquelle les substituants prennent les significations suivantes:
M représente un atome de titane, de zirconium, d'hafnium, de vanadium, de niobium ou de tantale,
X représente un atome de fluor, de chlore, de brome, d'iode, d'hydrogène, un groupe alkyle en C₁ à C₁₀, aryle en C₆ à C₁₅, alkylaryle ayant 1 à 10 atomes de C dans le résidu alkyle et 6 à 20 atomes de C dans le résidu aryle, -OR¹⁴ ou NR¹⁴R¹⁵
R¹⁴ et R¹⁵ représentant ici un groupe alkyle en C₁ à C₁₀, aryle en C₆ à C₁₅, alkylaryle, arylalkyle, fluoroalkyle ou fluoroaryle ayant respectivement 1 à 10 atomes de C dans le résidu alkyle et 6 à 20 atomes de C dans le résidu aryle,
R⁴ à R¹³ représente un atome d'hydrogène, un groupe alkyle en C₁ à C₁₀, cycloalkyle ayant 5 à 7 maillons et qui possède éventuellement en tant que substituant un groupe alkyle en C₁ à C₁₀, ou bien représente un groupe arylalkyle ou aryle en C₆ à C₁₅, ou bien représente Si(R¹⁶)₃, formule dans laquelle
R¹⁶ représente un groupe alkyle en C₁ à C₁₀, cycloalkyle en C₃ à C₁₀ ou aryle en C₆ à C₁₅.

3. Procédé selon les revendications 1 à 2, **caractérisé en ce que** l'on met en oeuvre en tant que constituant B) un composé métallique de formule générale I, dans laquelle M¹ représente un atome de métal du Groupe principal III de la Classification Périodique des Eléments.

4. Procédé selon les revendications 1 à 3, **caractérisé en ce que** l'on mélange les constituants A), B) et C) pour les introduire au plus tard 3 minutes après dans le réacteur.
